# EUROPEAN PATENT SPECIFICATION

(11) **EP 4 542 092 B1**
(45) Date of publication and mention of the grant of the patent: **11.03.2026**
(21) Application number: 24192247.5
(22) Date of filing: 01.08.2024
(51) Int. Cl.: F16K 1/48, F16K 1/22

(54) **BUTTERFLY VALVE**
KLAPPENVENTIL
VANNE PAPILLON

(30) Priority: 16.10.2023 IT 202300021453
(43) Date of publication of application: 23.04.2025
(73) Proprietor: T.I.S. Service S.p.A., 24060 Bolgare (BG) (IT)
(72) Inventor: ROTA, Eugenio, 24129 Bergamo (BG) (IT)
(74) Representative: Lunati & Mazzoni S.r.L.

(56) References cited:
- CN-A- 113 236 800
- CN-U- 201 844 035

## Description

This invention relates to a butterfly valve of the type specified in the preamble of the first claim.

Specifically, this invention is concerned with a butterfly valve, i.e., shut-off or safety valve, preferably used within water distribution systems, or hydraulic power plants, and capable of meeting the requirements of EN 593.

A similar device is described in patent application CN 201 844 035 U.

In particular, patent application CN 113 263 800 A discloses a butterfly valve according to the preamble of claim 1.

As is well known, shutoff valves are devices used to shut off, or sometimes just regulate, the flow of a fluid, whether water or gas.

In particular, plumbing systems where potable water, industrial water or sewage is to be conveyed may need valves whose reliability requirements are very high.

Among the various types of safety or shut-off valves used, butterfly valves are, in this regard, very popular since they can achieve high efficiency when it comes to ensuring availability and hygienic conditions of drinking water.

In addition, the valves must be designed to ensure reliable operation for life, along with all precautions taken to minimize the influence of corrosion and fluid contamination.

The butterfly valve disc, as the main part of the valve whose function is to shut off the flow, is located inside the butterfly valve annular body and is then connected to the body by shafts that allow relative movement between the disc and body. Of course, as mentioned above, the connection made by the shaft must ensure safe and reliable operation of the butterfly valve over a long period of time.

To reduce corrosive effects from contact with water, in traditional butterfly valves, exposed parts are covered with protective enamel coatings. However, all the handling mechanisms inside the body, which are not normally exposed to water contact, are not covered with protective material and, therefore, the connection between the shafts and the disc must be as precise and direct as possible, especially avoiding the possibility of axial movements of the shafts, which by moving away from the disc hub can lead to exposure of corrosion-sensitive materials and/or impair the valve's functionality.

Usually to prevent this movement, many manufacturers use the pin connection where the hole for the pin is drilled from the top of the disc hub, which has as a disadvantage a high possibility that during the working period, and due to the frequent opening and closing cycles, the pin may stick out.

The sticking out of the pin, of course, can create a lot of damage inside the pipeline, also compromising the coupling between disc and shafts and, consequently, the reliability of torque transmission and, due to the contact of unprotected material with fluids, appearance of rust and contamination of the entire water distribution system. In this situation, the technical task underlying this invention is to devise a butterfly valve capable of substantially overcoming at least part of the aforementioned drawbacks.

Within the scope of the said technical task, it is an important purpose of the invention to obtain a butterfly valve to reduce, if not cancel altogether, the possibility that relative axial movements may arise between the hub of the interception disc and the drive shafts.

Another important purpose of the invention is to make a butterfly valve to avoid or reduce wear of the various components, especially due to the corrosive effects given by the contact of water with the components.

In conclusion, an important task of the invention is to obtain a butterfly valve that enables high efficiency for a very long service life.

The specified technical task and purposes are achieved by a butterfly valve as claimed in the annexed claim 1.

Preferred embodiments are highlighted in the dependent claims.

The characteristics and benefits of the invention will be clarified in the following detailed description of some preferred embodiments of the invention, with reference to the accompanying drawings, wherein:

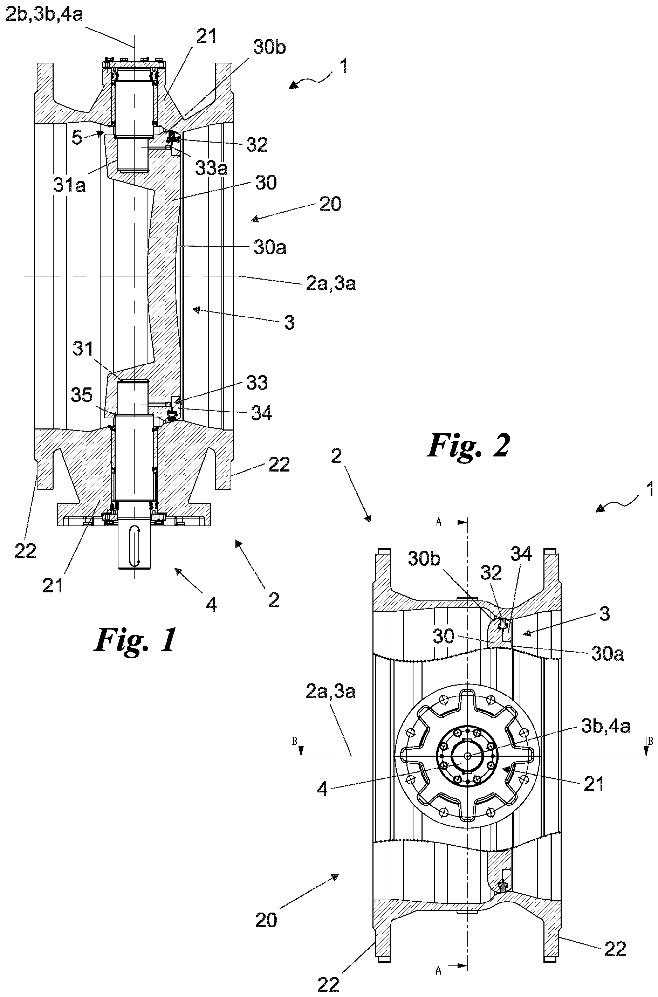

**Fig. 1** shows a cross-section view, specifically corresponding to the B-B section in Fig. 2 below, of a butterfly valve according to the invention;
**Fig. 2** illustrates a side view in only partial top and bottom sections of a butterfly valve according to the invention;

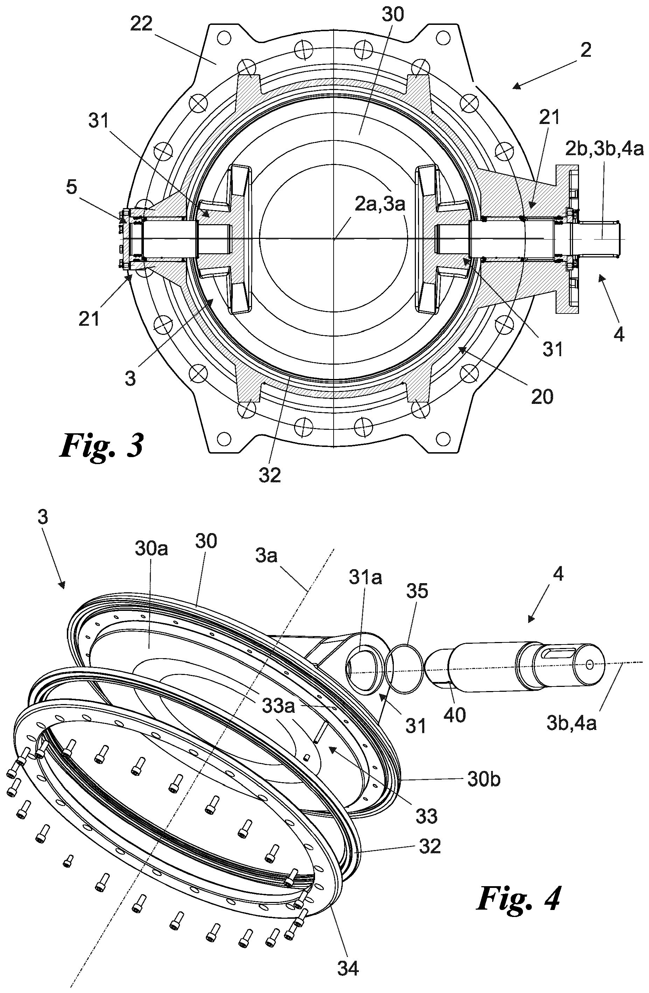

**Fig. 3** shows a longitudinal cross-section view, specifically corresponding to the A-A section in Fig. 2 below, of a butterfly valve according to the invention;
**Fig. 4** represents a perspective view of disc and guide shaft in exploded view of a butterfly valve according to the invention;
**Fig. 5** represents a cross-section view of disc and guide shaft in exploded view of a butterfly valve according to the invention;
**Fig. 6** illustrates a detailed view of the shaft-disc coupling and disc perimeter area of a butterfly valve according to the invention;
**Fig. 7** illustrates a front detail view of a disc housing of a butterfly valve according to the invention; and
**Fig. 8** represents a longitudinal cross-section view of a main seal of a butterfly valve according to the invention.

In this document, when measurements, values, shapes, and geometric references (such as perpendicularity and parallelism) are associated with words like "approximately" or other similar terms, such as "almost" or "substantially", they shall be understood as except for errors of measurement or imprecisions due to errors of production and/or manufacturing and, above all, except for a slight departure from the value, measurement, shape, or geometric reference with which it is associated. For example, if associated with a value, such terms preferably indicate a departure of no more than 10% of the value itself.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as reflected in the following discussions, terms such as "processing", "computing", "determination", "computation", or the like are considered to refer to the action and/or processes of a computer or similar electronic computing device that manipulates and/or transforms data represented as physical, such as electronic quantities of records of a computer system and/or memories, in other data similarly represented as physical quantities within computer systems, records, or other information storage, transmission, or display devices.

Unless otherwise stated, the measurements and data reported in this text shall be considered as performed in International Standard Atmosphere ICAO (ISO 2533:1975).

With reference to the figures, the butterfly valve according to the invention is globally referred to as number **1.**

Valve 1 is suitable for use within a hydraulic system, be it an urban hydraulic distribution network, such as an aqueduct, or a hydraulic power plant.

In general, like any valve, valve 1 is designed to regulate the flow of a fluid, in particular preferably a liquid such as water, passing through valve 1 itself.

Thus, valve 1 includes at least one body **2.**

Body 2 is the portion of valve 1 designed to cooperate directly with the other portions of the hydraulic system. In fact, preferably, body 2 is an annular body.

Therefore, body 2 preferably develops around a main central axis **2a.**

The main central axis 2a is preferably designed to be aligned with the development trajectory of the plumbing system piping to which valve 1 is operatively connected. Therefore, the main central axis 2a is essentially parallel to the fluid conveying direction when valve 1 is in use on a hydraulic system.

Body 2, being annular, also defines a slot **20.** Slot 20 is basically determined by a through-hole through which the fluid passes.

Thus, slot 20 is the portion of body 2 that is placed in continuity with the definitive ducts from the piping of a plumbing system, so that body 2 is overall configured to be operationally connected with a plumbing pipe.

In this regard, preferably, body 2 includes two flanges **22.**

Flanges 22 are arranged at two opposite faces of body 2.

Moreover, they are mutually spaced along the main central axis 2a. Therefore, they face in opposite directions and define the end parts of body 2 suitable for rigidly binding to pipe ends of the plumbing system to enable the installation of valve 1 in the system.

Body 2 also includes at least one hub **21.** Hub 21, as is well known, is basically the central part of a wheel or rotating organ that generally carries bearings housed within it to allow the component intended to be mounted within it to rotate.

Hub 21, in particular, is developed along a development axis **2b.**

The development axis 2b can substantially correspond to the axis of the cavity within which the rotating component is arranged. In addition, the development axis 2b is preferably normal, that is, perpendicular, to the main central axis 2a.

Thus, valve 1 also includes one disc **3.**

Disc 3 is basically the movable portion of valve 1. Thus, disc 3 is the portion of valve 1 that allows the flow of fluid passing through valve 1 to be regulated, or more generally controlled.

Disc 3 defines a secondary central axis **3a.** As such, the secondary central axis 3a corresponds to the axis perpendicular to the virtual extension plane of disc 3 and passing through the center of the latter.

Disc 3, moreover, is designed to fully occupy slot 20 when the secondary central axis 3a is aligned with the main central axis 2a.

In this condition, disc 3 interferes more with the fluid, if valve 1 is in use, and therefore essentially interrupts the passage of the fluid itself.

Thus, in this situation, valve 1 is in the closed configuration.

Disc 3 is, in detail, made up of a plurality of components.

Preferably, disc 3 includes at least one membrane element **30.** Membrane element 30 is such in that it has a reduced thickness. Thus, membrane element 30 is a body in which two dimensions prevail over the third, that is, a subtle body. In addition, preferably, the membrane element 30 is rigid i.e., not deformable by water when valve 1 is in operation.

In fact, the membrane element 30 defines an interception surface **30a.**

The interception surface 30a is basically the surface area of the membrane element 30 designed to contact water when valve 1 is in the closed configuration.

Thus, the interception surface 30a is preferably arranged at one side of the membrane element 30 suitable for facing a liquid when valve 1 is in the closed configuration.

The interception surface 30a is, in addition, bounded by a perimeter **30b.** The latter is therefore circumferential since it essentially corresponds to the edge area of disc 3 intended to contact the walls of the body 2 of valve 1.

Disc 3 includes, in addition, at least one housing **31.**

Housing 31 is basically accessible from outside disc 3. In particular it is accessible at perimeter 30b.

Thus, housing 31 is developed along a housing axis **3b.** The housing axis 3b is preferably normal to the secondary central axis 3a. Then, the housing axis 3b is developed along the virtual extension plane of disc 3.

Disc 3 also includes a main seal **32.**

Seal 32 is preferably annular. In fact, preferably, the main seal 32 is arranged at the perimeter 30b. The annular seal 32 also protrudes radially to the secondary central axis 3a. In detail, seal 32 protrudes from membrane element 30 in such a way that it contacts body 2 when valve 1 is in the closed configuration.

In this way, seal 32 is able to achieve a tight seal with body 2.

Disc 3 further includes an obstruction element **33.**

The obstruction element 33 develops through the membrane element 30. In detail, the obstruction element 33 develops transversely, e.g., perpendicularly, to the housing axis 3b.

Thus, the obstruction element 33 is accessible on the interception surface 30a, specifically through an access **33a.**

Access 33a is nothing more than a small hole applied to the interception surface 30a. It makes the obstruction element 33 accessible from the outside when access 33a is exposed to the outside.

As in any butterfly valve of prior art, in addition, valve 1 includes a guide shaft **4.** Guide shaft 4 is basically a shaft that guides the movement of disc 3 relative to body 2 by controlling the operation of valve 1.

Specifically, guide shaft 4 develops along a rotation axis **4a.**

The rotation axis 4a corresponds, in fact, to its own central axis. Therefore, the rotation axis 4a is the axis along which the guide shaft 4a is laid.

Guide shaft 4a is, in addition, inserted at least partially within housing 31. In this way the constraint, at least on rotation around the rotation axis 4a, of disc 3 and guide shaft 4 is ensured.

In addition, guide shaft 4 is inserted at least in hub 21. Thus, guide shaft 4a can rotate around the rotation axis 4a with respect to body 2 due to the connection with hub 21.

By virtue of the constraints just described, rotation axis 4a is aligned with development axis 2b and housing axis 3b.

In addition, to improve the coupling between housing 31 and guide shaft 4, guide shaft 4 is preferably counter-shaped at least partially to housing 31. In this way, and as already mentioned, the guide shaft 4 can transmit its own rotation around the development axis 4a with respect to the hub 21 to the disc 3.

Even more in detail, housing 31 can define a specific shape **31a.**

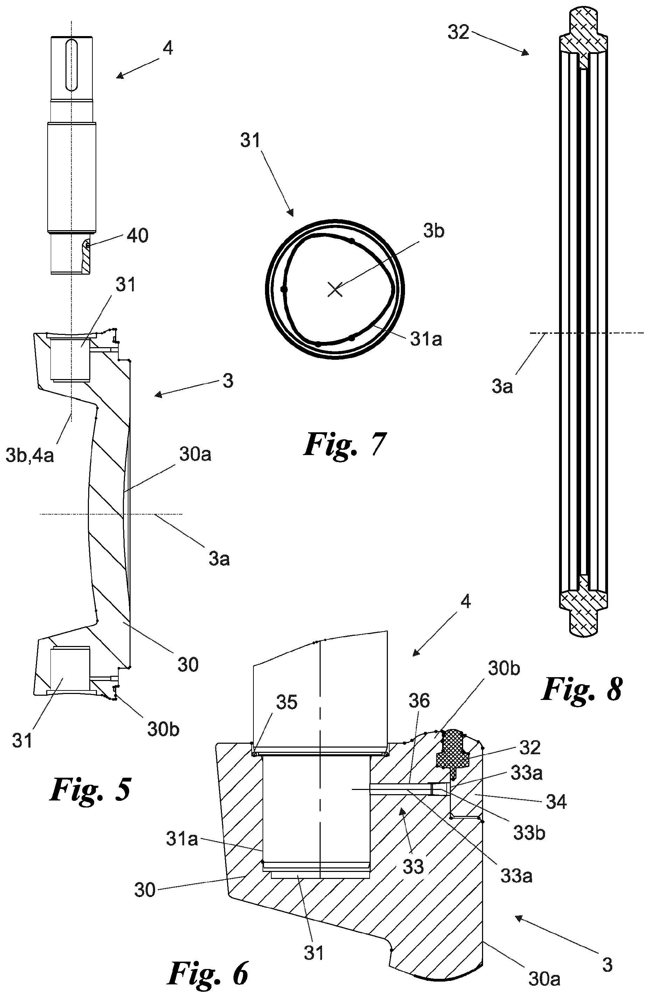

Shape 31a, shown explicitly in Fig. 7, is preferably defined in section perpendicular to housing axis 3b. In addition, shape 31a preferably and advantageously has polygonal shape. In contrast, guide shaft 4 includes at least one polygonal end counter-shaped to shape 31a.

The constraint with polygonal shape 31a ensures effective torque transmission from the guide shaft 4 to the disc 3.

In order for the movement of disc 3 can be controlled from outside, valve 1 could also include a motor operatively connected to guide shaft 4. The motor could, therefore, be configured to rotate guide shaft 4 around the rotation axis 4a relative to hub 21.

In any case, preferably, guide shaft 4 interacts with obstruction element 33.

In fact, obstruction element 33 is preferably movable transversely to the housing axis 3b so that at least one obstruction position can be defined. In the obstruction position, in detail, the obstruction element 33 protrudes at least partially within the housing 31 to interfere with the guide shaft 4. When the obstruction element 33 is in the obstruction position, therefore, it locks the guide shaft 4 against the disc 3 along the housing axis 3b.

Thus, the obstruction element 33 realizes, in the obstruction position, the axial constraint of the guide shaft 4 with respect to the disc 3 along the housing axis 3b. To improve the constraint, the guide shaft 4 can include at least one groove **40.**

If present, groove 40 is preferably arranged at its own side surface. In addition, groove 40 preferably develops radially to the rotation axis 4a so that it can accommodate an obstruction element 33 end, at least when obstruction element 33 is in the obstruction position.

Valve 1 includes some important special features.

In fact, advantageously, disc 3 also includes a crown **34.**

Crown 34 is a preferably annular or circular element. In addition, crown 34 defines at least one coupling condition. In the coupling condition, crown 34 overlaps the membrane element 30 at the level of perimeter 30b. Through the overlap, seal 32 is trapped between crown 34 and interception surface 30a near perimeter 30b.

Thus, crown 34 traps at least part of the main seal 32 and locks the seal 32 solidly to the membrane element 30.

In addition, access 33a is also positioned near perimeter 30b. Thus, advantageously, access 33a is blocked at least by crown 34 when crown 34 is in coupling condition.

In particular, access 33a can be blocked directly or indirectly. This means that crown 34 may itself block access 33a, or access 33a could also be blocked by the portion of seal 32 trapped between crown 34 and membrane element 30.

Thus, basically, blocking access 33a prevents obstruction element 33 from being in contact with the liquid, preventing it from being weakened or worn out, such as by corrosion, during the use of valve 1.

To improve this aspect, disc 3 can also include a secondary seal **35.**

If present, secondary seal 35 is preferably annular. In addition, secondary seal 35 is preferably arranged between guide shaft 4 and housing 31. Then, secondary seal 35 is placed around the guide shaft 4 so as to isolate the obstruction element 33 from the outside of housing 31. This means that not only is the obstruction element 33 not accessible to the liquid from the access 33a side, but also from the housing 31 side, the accessibility is obstructed by secondary seal 35.

In a preferred, but not exclusive, embodiment of valve 1, membrane element 30 includes a guide channel **36.**

Guide channel 36 runs transversely, preferably perpendicularly, to housing axis 3b. In addition, guide channel 36 runs transversely to housing axis 3b between housing 31 and access 33a.

Guide channel 36, in particular, is configured to accommodate obstruction element 33. In addition, guide channel 36 including at least one threaded portion adjacent to access 33a. Preferably, obstruction element 33 includes a rod 33c and a nut 33b.

Rod 33c and nut 33b can be in one piece; or rod 33a and nut 33b can be mutually distinct. Therefore, rod 33c is preferably inserted movably into guide channel 36. Nut 33b is advantageously externally threaded and, therefore, configured to engage the threaded portion so that rod 33c can be pushed along guide channel 36 in proportion to its rotation relative to the threaded portion.

Thus, nut 33b allows to control the obstruction tension with which the obstruction element locks the guide shaft 4 when in the obstruction position.

The valve 1 just described can essentially comprise a hub 21 and a guide shaft 4. Or, alternatively, body 2 may include an additional hub 21.

If present, the additional hub 21 is arranged at one side of body 2 opposite to the other hub 21.

Thus, guide shaft 4 can be inserted either inside housing 31 or inside both hubs 21. In this case, of course, the housing 31 can be basically defined as a duct made on the disc 3 housing part of the guide shaft 4 between the two hubs 21.

Or, in a preferred but not exclusive embodiment, disc 3 may, in turn, include an additional housing 31.

If present, the additional housing 31 is arranged at one side of disc 3 opposite to the other housing 31.

Thus, valve 1 can include, in this configuration, a support shaft **5.**

If present, the support shaft 5 also runs along the rotation axis 4a being preferably inserted, similarly to the guide shaft 2 at the other side of the disc 3, at least partially within the additional housing 31 and the additional hub 21.

Thus, the support shaft 5 can also be countershaped at least in part to the additional housing 31 so that it can transmit its own rotation around the development axis 4a with respect to the additional hub 21 to disc 3.

The additional housing 31 can also define a shape 31a as previously described.

The operation of the butterfly valve 1, previously described in structural terms, is basically similar to the operation of any butterfly valve known in prior art.

However, the butterfly valve 1 according to the invention achieves important advantages.

In fact, the butterfly valve 1 makes it possible to reduce, if not eliminate altogether, the possibility that relative axial movements may arise between the hub of the interception disc and the drive shafts. In fact, the design of the obstruction element 33 allows the guide shaft 4 to be effectively clamped to the disc 3, while also having the possibility of increasing the clamping tension.

Furthermore, the butterfly valve 1 allows to avoid or reduce wear of the various components, especially due to the corrosive effects given by the contact of water with the components. In fact, the presence of the crown 34, which, by itself or through the main seal 32, blocks access 33a, prevents corrosive seepage fatal to the maintenance of the axial constraint between guide shaft 4 and disc 3.

In addition, the secondary seal 35 also makes a contribution in terms of valve 1 efficiency.

In conclusion, mainly due to the advantages just described, the butterfly valve 1 overall allows for high efficiency over a very long lifetime.

Variations may be made to the invention that fall within the scope of the inventive concept defined in the claims.

In this context, all the details can be replaced by equivalent elements and any materials, shapes and dimensions can be used.

## Claims

1. A butterfly valve (1) comprising:
- an annular body (2) developed around a main central axis (2a) defining a slot (20), configured to be operatively connected to a hydraulic pipe and including at least one hub (21) developed along a development axis (2b) normal to said main central axis (2a);
- a disc (3) defining a secondary central axis (3a), suitable for entirely occupying said slot (20) when said secondary central axis (3a) is aligned with said main central axis (2a), i.e., said valve (1) is in a closed configuration, and including at least
- a membrane element (30) defining an interception surface (30a) at one side thereof suitable for handling a liquid when said valve (1) is in a closed configuration and bounded by a circumferential perimeter (30b)
- a housing (31) accessible from the outside of said disc (3) at said perimeter (30b) and extending along a housing axis (3b) normal to said secondary central axis (3a)
- an annular main seal (32) disposed at said perimeter (30b) and radially protruding from said secondary central axis (3a) to contact said body (2) when said valve (1) is in a closed configuration so as to achieve a hermetic seal with said body (2), and
- an obstruction element (33) extending through said membrane element (30) transversely to said housing axis (3b) and accessible on said interception surface (30a) by means of an access (33a)
- a guide shaft (4) extending along a rotation axis (4a), at least partly inserted within said housing (31) and said at least one hub (21) with said rotation axis (4a) aligned with said development axis (2b) and said housing axis (3b) and counter-shaped at least partly to said housing (31) in such a way that it can transmit its own rotation around said development axis (4a) with respect to said hub (21) to said disc (3);
- said obstruction element (33) being movable transversely to said housing axis (3b) so as to be able to define at least one obstruction position in which it protrudes at least partially within said housing (31) to interfere with said guide shaft (4) and to block said guide shaft (4) with respect to said disc (3) along said housing axis (3b), wherein
- said disc (3) comprises an annular crown (34) defining at least one coupling condition in which it overlaps said membrane element (30) at said perimeter (30b) to trap at least part of said main seal (32) and to rigidly clamp it to said membrane element (30), and
said valve (1) being **characterised in that**
- said access (33a) is disposed in proximity to said perimeter (30b) so as to be blocked, directly or indirectly, by said crown (34) when said crown (34) is in coupling condition.

2. Valve (1) according to claim 1, wherein said disc (3) comprises a secondary annular seal (35) disposed between said guide shaft (4) and said housing (31) so as to isolate said obstruction element (33) with respect to the outside of said housing (31).

3. Valve (1) according to any of the previous claims, wherein said housing (31) defines a shape (31a) in normal section to said housing axis (3b) having a polygonal shape and said guide shaft (4) includes at least one polygonal end counter-shaped to said shape (31a).

4. Valve (1) according to any of the previous claims, wherein said membrane element (30) comprises a guide channel (36) developed transversely to said housing axis (3b) between said housing (31) and said access (33a), configured to accommodate said obstruction element (33) and including at least one threaded portion adjacent to said access (33a), and said obstruction element (33) includes a rod (33b) movably inserted into said guide channel (36) and a nut (33b) externally threaded and configured to engage said threaded portion so as to allow said rod (33b) to be pushed along said guide channel (36) in proportion to its rotation with respect to said threaded portion.

5. Valve (1) according to any of the previous claims, wherein said guide shaft (4) comprises at least one groove (40) placed at a lateral surface thereof and developing radially to said rotation axis (4a) so as to be able to accommodate an end of said obstruction element (33) when said obstruction element (33) is in an obstruction position.

6. Valve (1) according to any of the previous claims, wherein said body (2) comprises a further hub (21) disposed in correspondence with one side of said body (2) opposite the other of said hubs (21).

7. Valve (1) according to the preceding claim, wherein said disc (3) comprises a further housing (31) disposed in correspondence with a side of said disc (3) opposite to the other of said housings (31), and said valve (1) comprising a support shaft (5) developed along said rotation axis (4a), inserted at least in part within said further housing (31) and said further hub (21) and counter-shaped at least in part to said further housing (31) so as to be able to transmit its own rotation around said development axis (4a) with respect to said further hub (21) to said disc (3).

8. Valve (1) according to any of the previous claims, wherein said body (2) comprises two flanges (22) arranged at two opposite faces of said body (2) mutually spaced along said main central axis (2a).

9. Valve (1) according to any of the previous claims, further comprising a motor operatively connected to said guide shaft (4) and configured to rotate said guide shaft (4) about said rotation axis (4a) relative to said hub (21).

10. A hydraulic system comprising a valve (1) according to any of the previous claims.

## Patentansprüche

1. Absperrklappe (1), umfassend:
- einen ringförmigen Körper (2), der um eine Hauptmittelachse (2a) ausgebildet ist und einen Schlitz (20) definiert, der dazu konfiguriert ist, operativ mit einer hydraulischen Leitung verbunden zu werden, und umfassend mindestens eine Nabe (21), die entlang einer Erstreckungsachse (2b) ausgebildet ist, die sich senkrecht zu der Hauptmittelachse (2a) erstreckt;
- eine Scheibe (3), die eine sekundäre Mittelachse (3a) definiert und die geeignet ist, den Schlitz (20) vollständig einzunehmen, wenn die sekundäre Mittelachse (3a) mit der Hauptmittelachse (2a) ausgerichtet ist, d.h. wenn die Klappe (1) sich in einer geschlossenen Konfiguration befindet, und mindestens umfassend
- ein Membranelement (30), das auf einer Seite davon eine Abfangsfläche (30a) definiert, die geeignet ist, eine Flüssigkeit zu behandeln, wenn sich die Klappe (1) in einer geschlossenen Konfiguration befindet, und durch einen umlaufenden Umfang (30b) begrenzt wird
- ein Gehäuse (31), das von der Außenseite der Scheibe (3) an dem Umfang (30b) zugänglich ist und sich entlang einer Gehäuseachse (3b) erstreckt, die senkrecht zu der sekundären Mittelachse (3a) ist,
- eine ringförmige Hauptdichtung (32), die an dem Umfang (30b) angeordnet ist und radial aus der sekundären Mittelachse (3a) vorsteht, um mit dem Körper (2) in Kontakt zu treten, wenn sich die Klappe (1) in einer geschlossenen Konfiguration befindet, um eine hermetische Abdichtung mit dem Körper (2) zu erhalten, und
- ein Blockierungselement (33), das sich durch das Membranelement (30) quer zu der Gehäuseachse (3b) erstreckt und auf der Abfangsfläche (30a) mittels eines Zugangs (33a) zugänglich ist,
- eine Führungswelle (4), die sich entlang einer Drehachse (4a) erstreckt, die mindestens teilweise innerhalb des Gehäuses (31) und der mindestens einen Nabe (21) eingesetzt wird, wobei die Drehachse (4a) mit der Erstreckungsachse (2b) und der Gehäuseachse (3b) ausgerichtet ist und mindestens teilweise gegenförmig zu dem Gehäuse (31) ausgebildet ist, sodass sie ihre eigene Drehung um die Erstreckungsachse (4a) in Bezug auf die Nabe (21) auf die Scheibe (3) übertragen kann;
- wobei das Blockierungselement (33) quer zu der Gehäuseachse (3b) beweglich ist, sodass es mindestens eine Blockierungsstellung definieren kann, in der es mindestens teilweise innerhalb des Gehäuses (31) vorsteht, um mit der Führungswelle (4) zu interferieren und die Führungswelle (4) in Bezug auf die Scheibe (3) entlang der Gehäuseachse (3b) zu blockieren, wobei
- die Scheibe (3) eine ringförmige Krone (34) umfasst, die mindestens einen Kupplungszustand definiert, in dem sie das Membranelement (30) an dem Umfang (30b) überlappt, um mindestens einen Teil der Hauptdichtung (32) einzuschließen und diese starr an das Membranelement (30) festzuhalten, und wobei die Klappe (1) **dadurch gekennzeichnet ist, dass**
- der Zugang (33a) in der Nähe des Umfangs (30b) angeordnet ist, sodass er direkt oder indirekt durch die Krone (34) blockiert wird, wenn sich die Krone (34) in dem Kupplungszustand befindet.

2. Klappe (1) nach Anspruch 1, wobei die Scheibe (3) eine sekundäre ringförmige Dichtung (35) umfasst, die zwischen der Führungswelle (4) und dem Gehäuse (31) angeordnet ist, um das Blockierungselement (33) in Bezug auf die Außenseite des Gehäuses (31) zu isolieren.

3. Klappe (1) nach einem der vorhergehenden Ansprüche, wobei das Gehäuse (31) in Senkrechtabschnitt zu der Gehäuseachse (3b) eine Gestalt definiert, die eine polygonale Gestalt aufweist und die Führungswelle (4) mindestens ein polygonales Ende aufweist, das gegenförmig zu der Gestalt (31a) ausgebildet ist.

4. Klappe (1) nach einem der vorhergehenden Ansprüche, wobei das Membranelement (30) einen Führungskanal (36) umfasst, der sich quer zu der Gehäuseachse (3b) zwischen dem Gehäuse (31) und dem Zugang (33a) erstreckt, der dazu konfiguriert ist, das Blockierungselement (33) aufzunehmen, und umfassend mindestens einen Gewindeabschnitt, der an den Zugang (33a) angrenzend ist, und wobei das Blockierungselement (33) eine Stange (33b) umfasst, die beweglich in den Führungskanal (36) eingesetzt ist, sowie eine Mutter (33b), die außen mit einem Gewinde versehen ist und dazu konfiguriert ist, mit dem Gewindeabschnitt in Eingriff zu stehen, sodass der Stange (33b) zu erlauben, entlang des Führungskanals (36) im Verhältnis zu ihrer Drehung in Bezug auf den Gewindeabschnitt geschoben zu werden.

5. Klappe (1) nach einem der vorhergehenden Ansprüche, wobei die Führungswelle (4) mindestens eine Nut (40) aufweist, die an einer Seitenfläche derselben angeordnet ist und sich radial zu der Drehachse (4a) erstreckt, um in der Lage zu sein, ein Ende des Blockierungselements (33) aufzunehmen, wenn sich das Blockierungselement (33) in einer Blockierungsstellung befindet.

6. Klappe (1) nach einem der vorhergehenden Ansprüche, wobei der Körper (2) eine weitere Nabe (21) umfasst, die an einer Seite des Körpers (2) angeordnet ist, die der anderen der Naben (21) gegenüberliegt.

7. Klappe (1) nach dem vorhergehenden Anspruch, wobei die Scheibe (3) ein weiteres Gehäuse (31) umfasst, das an einer Seite der Scheibe (3) angeordnet ist, die dem anderen der Gehäuse (31) gegenüberliegt, und wobei die Klappe (1) eine Stützwelle (5) umfasst, die sich entlang der Drehachse (4a) erstreckt, mindestens teilweise in das weitere Gehäuse (31) und die weitere Nabe (21) eingesetzt ist und mindestens teilweise gegenförmig zu dem weiteren Gehäuse (31) ausgebildet ist, um in der Lage zu sein, ihre eigene Drehung um die Erstreckungsachse (4a) in Bezug auf die weitere Nabe (21) auf die Scheibe (3) zu übertragen.

8. Klappe (1) nach einem der vorhergehenden Ansprüche, wobei der Körper (2) zwei Flansche (22) umfasst, die an zwei gegenüberliegenden Flächen des Körpers (2) angeordnet sind und entlang der Hauptmittelachse (2a) voneinander beabstandet sind.

9. Klappe (1) nach einem der vorhergehenden Ansprüche, ferner umfassend einen Motor, der operativ mit der Führungswelle (4) verbunden ist und dazu konfiguriert ist, die Führungswelle (4) in Bezug auf die Nabe (21) um die Drehachse (4a) zu drehen.

10. Hydraulisches System, umfassend eine Klappe (1) nach einem der vorhergehenden Ansprüche.

## Revendications

1. Une vanne papillon (1) comprenant :
- un corps annulaire (2) développé autour d'un axe central principal (2a) définissant une ouverture (20), configuré pour être relié de manière opérationnelle à une conduite hydraulique et comprenant au moins un moyeu (21) développé selon un axe de développement (2b) normal audit axe central principal (2a) ;
- un disque (3) définissant un axe central secondaire (3a), apte à occuper entièrement ladite ouverture (20) lorsque ledit axe central secondaire (3a) est aligné avec ledit axe central principal (2a), c'est-à-dire lorsque ladite vanne (1) est dans une configuration fermée, et comprenant au moins
- un élément de membrane (30) définissant une surface d'interception (30a) sur l'un de ses côtés, apte à interagir avec un liquide lorsque ladite vanne (1) est dans une configuration fermée et délimitée par un périmètre circonférentiel (30b)
- un logement (31) accessible depuis l'extérieur dudit disque (3) au niveau dudit périmètre (30b) et s'étendant selon un axe de logement (3b) normal audit axe central secondaire (3a)
- un joint principal annulaire (32) disposé audit périmètre (30b) et faisant saillie radialement par rapport audit axe central secondaire (3a) pour entrer en contact avec ledit corps (2) lorsque ladite vanne (1) est dans une configuration fermée afin de réaliser une étanchéité hermétique avec ledit corps (2), et
- un élément d'obturation (33) s'étendant à travers ledit élément de membrane (30) transversalement audit axe de logement (3b) et accessible sur ladite surface d'interception (30a) au moyen d'un accès (33a)
- un arbre de guidage (4) s'étendant selon un axe de rotation (4a), au moins partiellement inséré à l'intérieur dudit logement (31) et dudit au moins un moyeu (21), ledit axe de rotation (4a) étant aligné avec ledit axe de développement (2b) et ledit axe de logement (3b), et étant conformé au moins en partie de manière complémentaire audit logement (31) de sorte qu'il puisse transmettre sa propre rotation autour dudit axe de développement (4a) par rapport audit moyeu (21) audit disque (3) ;
- ledit élément d'obturation (33) étant mobile transversalement audit axe de logement (3b) de manière à pouvoir définir au moins une position d'obturation dans laquelle il fait saillie au moins partiellement à l'intérieur dudit logement (31) pour interférer avec ledit arbre de guidage (4) et bloquer ledit arbre de guidage (4) par rapport audit disque (3) selon ledit axe de logement (3b), dans laquelle
- ledit disque (3) comprend une couronne annulaire (34) définissant au moins une condition d'accouplement dans laquelle elle recouvre ledit élément de membrane (30) audit périmètre (30b) afin de piéger au moins une partie dudit joint principal (32) et de le serrer rigidement contre ledit élément de membrane (30), et
ladite vanne (1) étant **caractérisée en ce que**
- ledit accès (33a) est disposé à proximité dudit périmètre (30b) de manière à être bloqué, directement ou indirectement, par ladite couronne (34) lorsque ladite couronne (34) est en condition d'accouplement.

2. . Vanne (1) selon la revendication 1, dans laquelle ledit disque (3) comprend un joint annulaire secondaire (35) disposé entre ledit arbre de guidage (4) et ledit logement (31) de manière à isoler ledit élément d'obturation (33) par rapport à l'extérieur dudit logement (31).

3. . Vanne (1) selon l'une quelconque des revendications précédentes, dans laquelle ledit logement (31) définit une forme (31a), en section normale audit axe de logement (3b), ayant une forme polygonale et ledit arbre de guidage (4) comprend au moins une extrémité polygonale conformée de manière complémentaire à ladite forme (31a).

4. **.** Vanne (1) selon l'une quelconque des revendications précédentes, dans laquelle ledit élément de membrane (30) comprend un canal de guidage (36) développé transversalement audit axe de logement (3b) entre ledit logement (31) et ledit accès (33a), configuré pour loger ledit élément d'obturation (33) et comprenant au moins une portion filetée adjacente audit accès (33a), et ledit élément d'obturation (33) comprend une tige (33b) insérée de manière mobile dans ledit canal de guidage (36) et un écrou (33b) fileté extérieurement et configuré pour coopérer avec ladite portion filetée de manière à permettre à ladite tige (33b) d'être poussée le long dudit canal de guidage (36) proportionnellement à sa rotation par rapport à ladite portion filetée.

5. **.** Vanne (1) selon l'une quelconque des revendications précédentes, dans laquelle ledit arbre de guidage (4) comprend au moins une rainure (40) disposée sur une surface latérale de celui-ci et s'étendant radialement par rapport audit axe de rotation (4a) de manière à pouvoir loger une extrémité dudit élément d'obturation (33) lorsque ledit élément d'obturation (33) est dans une position d'obturation.

6. **.** Vanne (1) selon l'une quelconque des revendications précédentes, dans laquelle ledit corps (2) comprend un autre moyeu (21) disposé en correspondance avec un côté dudit corps (2) opposé à l'autre desdits moyeux (21).

7. **.** Vanne (1) selon la revendication précédente, dans laquelle ledit disque (3) comprend un autre logement (31) disposé en correspondance avec un côté dudit disque (3) opposé à l'autre desdits logements (31), et ladite vanne (1) comprenant un arbre de support (5) développé selon ledit axe de rotation (4a), inséré au moins en partie dans ledit autre logement (31) et ledit autre moyeu (21) et conformé au moins en partie de manière complémentaire audit autre logement (31) de manière à pouvoir transmettre sa propre rotation autour dudit axe de développement (4a) par rapport audit autre moyeu (21) audit disque (3).

8. . Vanne (1) selon l'une quelconque des revendications précédentes, dans laquelle ledit corps (2) comprend deux brides (22) disposées sur deux faces opposées dudit corps (2), mutuellement espacées le long dudit axe central principal (2a).

9. .. Vanne (1) selon l'une quelconque des revendications précédentes, comprenant en outre un moteur relié de manière opérationnelle audit arbre de guidage (4) et configuré pour faire tourner ledit arbre de guidage (4) autour dudit axe de rotation (4a) par rapport audit moyeu (21).

10. .. Un système hydraulique comprenant une vanne (1) selon l'une quelconque des revendications précédentes.
